# EUROPÄISCHE PATENTSCHRIFT

(11) **EP 1 352 442 B1**
(45) Veröffentlichungstag und Bekanntmachung des Hinweises auf die Patenterteilung: **06.10.2004**
(21) Anmeldenummer: 02715411.1
(22) Anmeldetag: 11.01.2002
(51) Int. Cl.: H01M 8/10, H01M 8/14

(54) **BRENNSTOFFZELLE MIT AMMONIUMPOLYPHOSPHAT-KOMPOSIT ALS PROTONENLEITENDEM FESTELEKTROLYT FÜR DEN BETRIEB IM TEMPERATURBEREICH 200-600 C**
FUEL CELL COMPRISING AN AMMONIUM POLYPHOSPHATE COMPOSITE AS A PROTON-CONDUCTING SOLID ELECTROLYTE, FOR OPERATING AT TEMPERATURES BETWEEN 200 AND 600 C
CELLULE ELECTROCHIMIQUE COMPORTANT UN COMPOSITE CONTENANT DU POLYPHOSPHATE D'AMMONIUM COMME ELECTROLYTE SOLIDE CONDUCTEUR DE PROTONS, POUR FONCTIONNER DANS LA PLAGE DE TEMPERATURE ALLANT DE 200 A 600 C

(30) Priorität: 12.01.2001 DE 10101315
(43) Veröffentlichungstag der Anmeldung: 15.10.2003
(73) Patentinhaber: Stimming, Ulrich, 81479 München (DE)
(72) Erfinder: STIMMING, Ulrich, 81479 München (DE); HAUFE, Stefan, 81371 München (DE)
(74) Vertreter: Luderschmidt, Schüler & Partner
(86) Internationale Anmeldenummer: PCT/EP2002/000200
(87) Internationale Veröffentlichungsnummer: WO 2002/056406

(56) Entgegenhaltungen:
- WO-A-02/11226
- DE-A- 19 821 978
- US-A- 4 656 735
- KENJO T ET AL: "Proton conductors based on ammonium polyphosphate" , SOLID STATE IONICS, DIFFUSION & REACTIONS, FEB. 1995, NETHERLANDS, VOL. 76, NR. 1-2, PAGE(S) 29 - 34 XP002195642 ISSN: 0167-2738 in der Anmeldung erwähnt das ganze Dokument
- CAPPADONIA M ET AL: "Preliminary study on the ionic conductivity of a polyphosphate composite" , 9TH INTERNATIONAL CONFERENCE ON SOLID STATE PROTONIC CONDUCTORS, BLED, SLOVENIA, 17-21 AUG. 1998 , SOLID STATE IONICS, DIFFUSION & REACTIONS, OCT. 1999, ELSEVIER, NETHERLANDS, PAGE(S) 333 - 337 XP002195643 ISSN: 0167-2738 in der Anmeldung erwähnt Seite 333 -Seite 334

## Beschreibung

### TECHNISCHES GEBIET

Die Erfindung betrifft eine Brennstoffzelle mit protonenleitendem Festelektrolyt für den Betrieb im Mitteltemperaturbereich (200-600°C).

### STAND DER TECHNIK

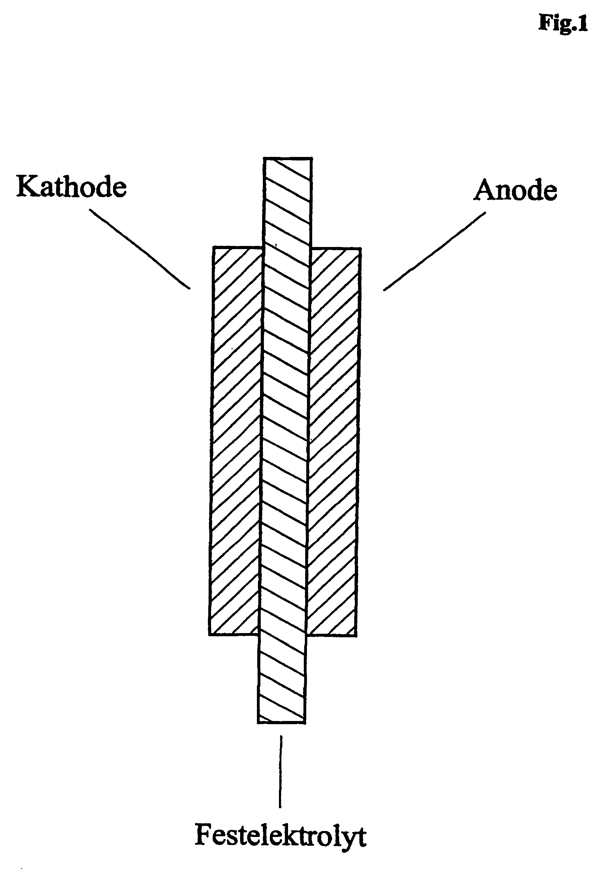

In Brennstoffzellen wird die in einem Brennstoff gespeicherte chemische Energie direkt in elektrische Energie und Wärme umgewandelt. Der Brennstoff und ein für die elektrochemischen Umsetzung notwendiges Oxidant werden dabei kontinuierlich zugeführt. Die einzeine Brennstoffzelle weist zwei Elektroden, eine Anode und eine Kathode auf, zwischen denen der Elektrolyt angeordnet ist. Eine solche Anordnung wird auch als Membran-Elektroden-Einheit bezeichnet (siehe Fig. 1).
In einer Brennstoffzelle wird an der Anode der Brennstoff oxidiert, während an der Kathode das Oxidant reduziert wird. Der Elektrolyt trennt beide Bereiche und verhindert auf diese Weise einen elektronischen und chemischen Kurzschluss. Ferner sorgt er aufgrund seiner hohen Ionenleitfähigkeit für den ionischen Stofftransport in der Zelle.
Die Betriebstemperatur einer Brennstoffzelle ist abhängig von den Eigenschaften des entsprechenden Elektrolyten. Es existieren Brennstoffzellen im Niedertemperaturbereich (< 200°C) und solche im Hochtemperaturbereich (> 600°C). Zu den erstgenannten gehören die Phosphorsaure Brennstoffzelle (PAFC) und alle Brennstoffzellen mit Protonenaustauschmembran (PEMFC, DMFC); zu den letztgenannten zählen die Oxidkeramische Brennstoffzelle (SOFC) und die Karbonatschmelz-Brennstoffzelle (MCFC).
In beiden Temperaturbereichen ist jedoch die Funktion der Brennstoffzelle eingeschränkt. Bei Temperaturen > 600°C existieren Probleme bei der Langzeitstabilität, mit der thermischen Zyklierbarkeit und der Gasdichtigkeit der Brennstoffzelle sowie Materialprobleme infolge von Korrosion. Bei Temperaturen < 200°C kommt es bei der Verwendung von Wasserstoff der bei PEMFCs einen Kohlenmonoxidanteil > 50 ppm bzw. bei PAFCs > 1% aufweist, zu einer Vergiftung des Anodenkatalysators. Dies führt - wie auch die Verwendung von flüssigem oder gasförmigem Methanol als Brennstoff - zu drastischen Einbußen in der Leistungsfähigkeit der Brennstoffzelle. Für reformierten Wasserstoff der einen Kohlenmonoxid Anteil >> 1% besitzt, ist demzufolge eine aufwendige und somit kostenträchtige Gasreinigung erforderlich.

Im Mitteltemperaturbereich (200-600°C) sind bisher kommerziell keine für den Einsatz in Brennstoffzellen geeigneten Elektrolyte erhältlich. Der Betrieb von Brennstoffzellen in diesem Temperaturbereich würde dagegen den Vorteil bieten, dass zum einen der Anodenkatatysator wesentlich toleranter bzw. ab ca. 300°C sogar unempfindlich gegenüber Kohlenmonoxid ist und zum anderen Materialprobleme, wie sie im Hochtemperaturbereich auftreten, nicht zum Tragen kommen. Weiterhin ist im Vergleich zum Niedertemperaturbereich die Elektrodenkinetik deutlich erhöht. In der Brennstoffzelle können damit bei geeignetem Katalysator reformierter Wasserstoff Methanol, sowie höherwertige Alkohole direkt und ohne Leistungseinbuße umgesetzt werden. Neben einer Verringerung der Kosten führt dies insbesondere zu einer Verbesserung der Leistungscharakteristik der Brennstoffzelle sowie zu einer deutlichen Systemvereinfachung.
Zu den Festelektrolyten, deren Leitfähigkeitseigenschaften im Hinblick auf den Mitteltemperaturbereich untersucht worden sind, gehören u.a. Cer-Gadoliniumoxide und Ammoniumpolyphosphate [1,2,3].
[1] B.C.H. Steele, *Solid State Ionics,* **129** (2000) 95-110.
[2] T. Kenjo and Y. Ogawa, *Solid State Ionics*, **76** (1995), 29-34.
[3] M. Cappadonia, O. Niemzig and U. Stimming, *Solid Sate Ionics*, **125** (1999) 333-337.

Ammoniummetaphosphat (NH₄PO₃) weist beispielweise in einer Ammoniak-Atmosphäre Leitfähigkeiten auf, die in der Größenordnung von 10⁻⁷ S/cm liegen. Nach 20-stündigem Tempern bei 250°C, bei dem durch Zersetzung von NH₄PO₃ NH₄PO₃-HPO₃ entsteht, wird allerdings bei 300°C in trockenem Wasserstoff eine Leitfähigkeit von 5×10⁻³ S/cm gemessen. Oberhalb von 300°C zersetzt sich bzw. schmilzt dieses Material. Dagegen sind mit SiO₂ oder Al(PO₃)₃ stablisierte Ammoniumpolyphosphate NH₄PO₃-HPO₃ bei Temperaturen>300°C stabil. Sie zeigen in trockenem Wasserstoff bei 400°C Leitfähigkeiten von 0.1 S/cm, in feuchter Gasumgebung bei 300°C von 9×10⁻² S/cm [2,3]. Die in Ref. [3] untersuchten Ammoniumpolyphosphate sind nach einem ersten Aufheizen auf 300°C weiterhin chemisch und thermisch stabil.
Obwohl der Einsatz des Materials von Ref[2] als Elektrolyt in Brennstoffzellen vorgeschlagen wird,. werden weder der Effekt von Wasser in [2], noch die mechanische Stabilität, noch die Gasdichtigkeit in [2,3] untersucht. Die letztgenannten sind essentielle Eigenschaften eines Feselektrolyten für Brennstoffzelle, gleichwertig zur Leitfähigkeit, und sie wurden als mangelhaft nachgewiesen.

### DARSTELLUNG DER ERFINDUNG

Aufgabe der vorliegenden Erfindung ist es, einen Elektrolyten für den Betrieb einer Brennstoffzelle im Temperaturbereich zwischen 200 und 600°C zur Verfugung zu stellen. In diesem Temperaturbereich ist die Wirkung von Katalysatorgiften wie Kohlenmonoxid stark verringert bzw. aufgehoben sowie die Verwendung von reformiertem Methanol als Brennstoff die interne Reformierung von Methanol bzw. die direkte Oxidation von Methanol möglich. Der Elektrolyt muß eine hohe Leitfähigkeit aufweisen. Darüber hinaus soll er mechanisch, thermisch, chemisch stabil sowie gasdicht sein.
Erfindungsgemäß werden als Elektrolyte in einer Membran-Elektroden-Einheit (Fig.1) Ammoniumpolyphosphat-haltige Komposite (APP-K) eingesetzt. Diese bestehen aus Ammoniumpolyphosphat als protonenleitendem Material, das in die Poren einer porösen Matrix eingebettet ist, wobei die Matrix selbst aus protonenleitendem Material bestehen kann.

Das Ammoniumpolyphosphat (APP) besteht dabei aus
NH₄PO₃-HPO₃, oder
[NH₄PO₃]ₓ [SiO₂]_{y} mit y=1 und 4 ≤ x ≤ 104, bevorzugt mit 18 ≤ x ≤ 100, noch bevorzugter mit 30 ≤ x ≤ 80, mit 40 ≤ x ≤ 60; oder
[NH₄PO₃]ₓ [GeO₂]_{y} mit y=1 und 4 ≤ x ≤ 104, bevorzugt mit 18 ≤ x ≤ 100, noch bevorzugter mit 30 ≤ x ≤ 80, mit 40 ≤ x ≤ 60, oder
[NH₄PO₃]ₓ [Al(PO₃)₃]_{y} mit y=1 und 0.3 ≤ x ≤ 100, bevorzugt mit 3 ≤ x ≤100, noch bevorzugter mit 5 ≤ x ≤ 80, mit 10 ≤ x ≤ 50.

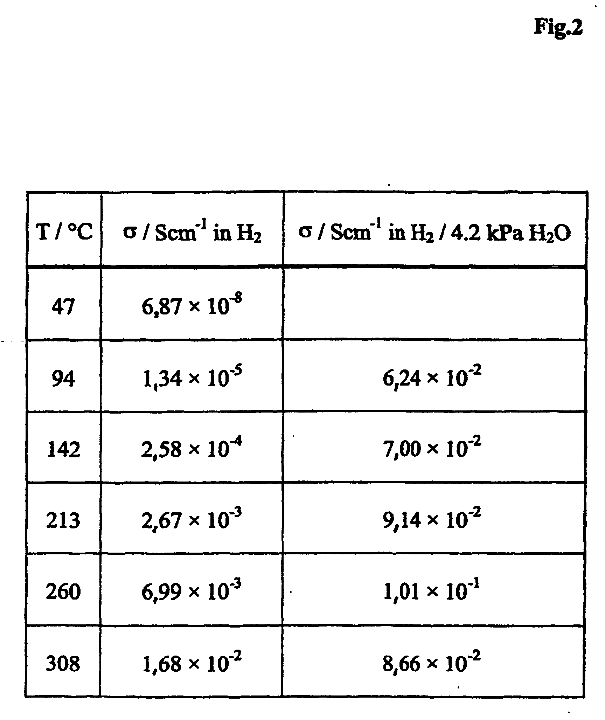

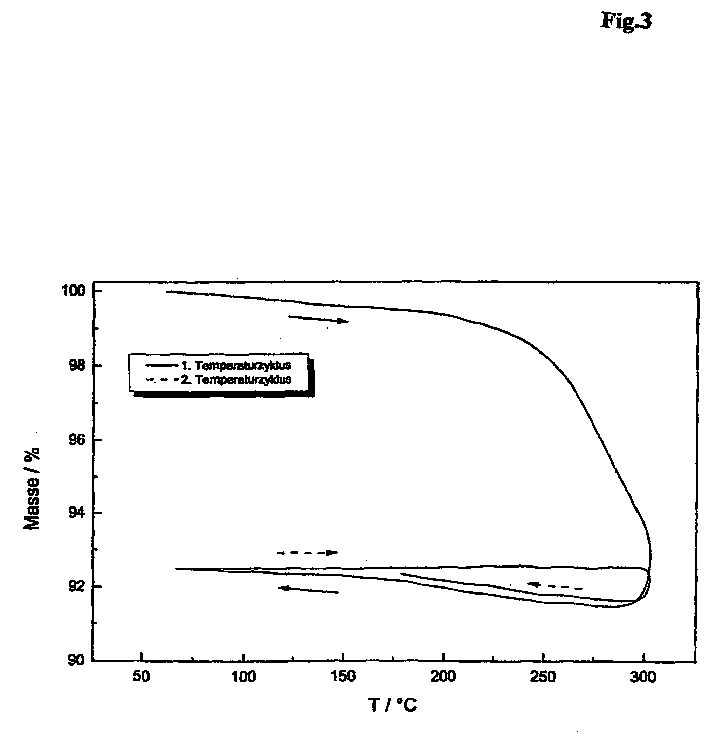

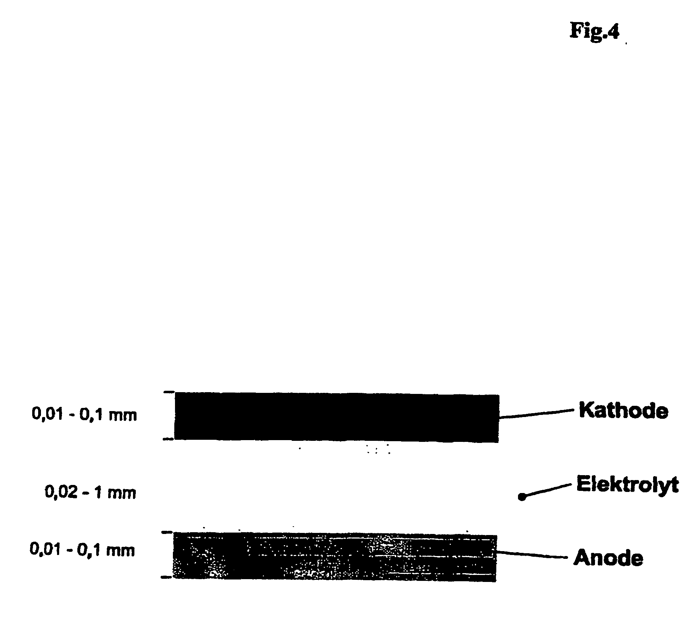

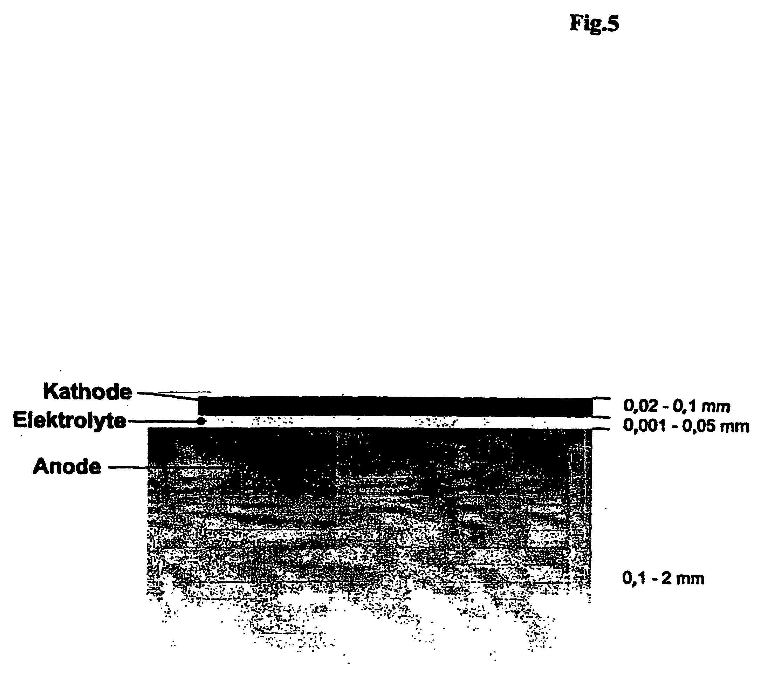

Die poröse Matrix, in die das APP eingebettet ist, besteht entweder aus thermostabilen Polymervliesen, aus Glasfasern, oder aus porösen anorganischen Materialien, wie beispielsweise Oxiden und/oder Salzen der Elemente der 3. und/oder 4. Gruppe des Periodischen Systems, z.B. Zeolithe. Geeignete Vliese weisen eine Porosität zwischen 30 und 95 Vol.% auf; im Fall poröser anorganischer Materialien beträgt das Molverhältnis bezogen auf das APP 25-90%.
Weiterhin kann das APP auch in einem protonenleitfähigen Polymer, z.B. Nafion, eingebettet sein, wobei das Gewichtverhältnis bezogen auf das APP im Material zwischen 25 und 90% liegt.
Eine hohe protonische eines solchen Festelektrolyten wird nach Aktivierung zwischen 250 und 300°C bzw. in Gegenwart feuchter Gasphase erzielt.
Die Leitfähigkeit in trockenem und feuchtem Wasserstoff ist mit denen aus [2] und [3] vergleichbar (siehe Fig.2). Außerdem sind die Festelektrolyte beständig gegenüber Methan, Methanol sowie reformiertem, gereinigtem und ungereinigtem, Wasserstoff Weiterhin sind sie gasdicht und thermisch stabil ab dem zweitem thermischen Zyklus (siehe Fig.3).
Für eine vorteilhafte Anwendung weist der Festelektrolyt eine Dicke zwischen 0,001 und 1 mm auf Dieser kann entweder selbsttragend sein (Elektrolytdicke: 0,02 - 1 mm, bevorzugt 0,05-0,8 mm, noch bevorzugter 0,1-0,5 mm, Fig.4) oder auf einem ausreichend stabilen Substrat, das gleichzeitig als Elektrode dient, aufgebracht sein (Elektrolytdicke: 0,001 - 0,05 mm, bevorzugt 0,005-0,04 mm, noch bevorzugter 0,01-0,03 mm, Fig.5).

Die Elektroden der Elektrolyt-Elektroden-Einheit gemäß der Erfindung bestehen aus Platin, Edelmetallen, Metalloxiden, Platinlegierungen, Silber, Stahl und/oder Cermets und dienen auch als Reagenzienverteiler. Z.B. besteht die Anode dabei aus einem Cermet des Elektrolytmaterials und Metallen, während die Kathode aus Stahl, Edelmetallen, Metalloxiden oder Edelmetallverbindungen besteht. Je nach verwendetem Elektrolyt ergeben sich Membran-Elektroden-Einheit verschiedener Bauart. Im Fall eines selbsttragenden Elektrolyten weisen die Elektroden eine Dicke von 0,01-0,1 mm auf Ist dagegen der Elektrolyt auf einem tragenden Elektrodensubstrat aufgebracht, beträgt die Dicke der tragenden Elektrode 0,1-2mm, während die andere Elektrode 0,01-0,1 mm dick ist. Dabei können die Elektroden durch übliche Verfahren wie Siebdruckverfahren, Sprühverfahren, Gießverfahren, Plasmaverfahren aufgebracht werden.

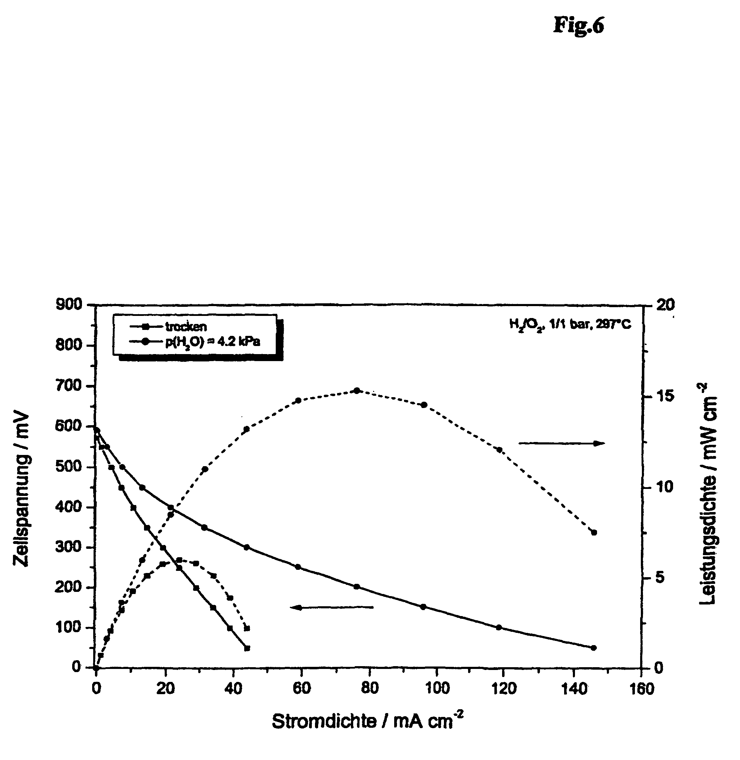

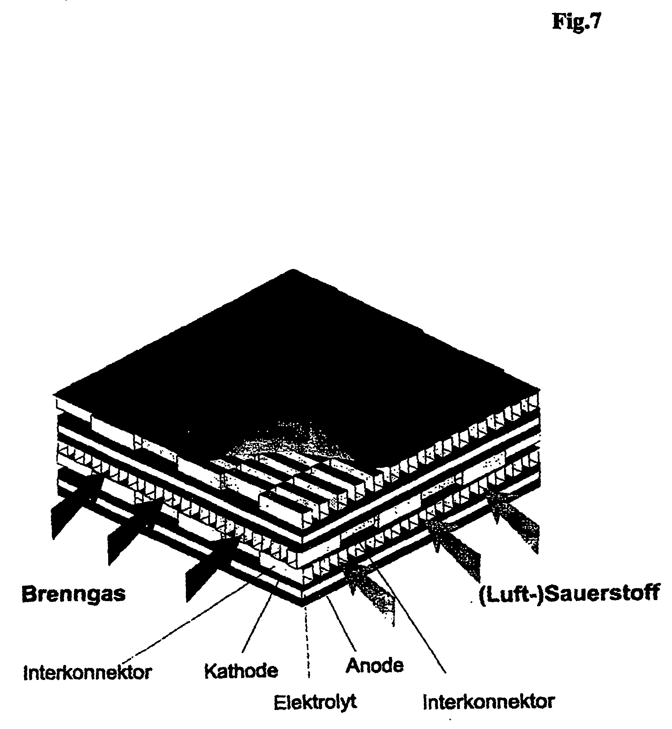

Der Betrieb einer entsprechenden Brennstoffzelle erfolgt, indem auf der Anodenseite kontinuierlich flüssige oder gasförmige Alkohole, insbesondere Methanol, zugeführt werden. Alternativ kann auch hauptsächlich Methan oder reformierter, gereinigter bzw. nicht gereinigter, Wasserstoff umgesetzt werden. Auf der Kathodenseiten werden Sauerstoff und/oder, Luft kontinuierlich zugeführt. Die Betriebtemperatur einer solchen Brennstoffzelle liegt zwischen 200 und 600°C, bevorzugt zwischen 300 und 500°C. Fig. 6 zeigt in diesem Zusammenhang die Strom-Spannungs-Kennlinie einer bei 297°C betriebenen H₂-O₂ Brenstoffzelle in trockener und feuchter Gasumgebung (4.2 kPa H₂O).
Einzelne Membran-Elektroden-Einheiten lassen sich z.B. mit Hilfe von aus Edelstahl bestehenden Interkonnektoren zu Brennstoffzellenstacks verschalten (Fig.7). Diese Brennstoffzellenstacks eignen sich zur mobilen, portablen und stationären Stromerzeugung.

Neben dem Einsatz in Brennstoffzellen eignet sich der oben beschriebene protonenleitende Festelektrolyt auch für die Verwendung in Elektrolyseuren, elektrochemischen Wasserstoffkonzentrations- und Dampfkonzentrationssensoren.

### BEISPIELE

### Beispiel 1: Herstellung von NH₄PO₃

NH₄PO₃ entsteht beim stöchiometrischen Umsetzen von Ammoniumdihydrogenphosphat (NH₄H₂PO₄) mit Harnstoff ((NH₂)₂CO) und nachfolgendem Tempern. Dazu werden die Ausgangsstoffe gemischt, innig miteinander vermahlen und in einem Al₂O₃-Tiegel zwei Stunden bei 200°C in Ammoniakatmosphäre zur Reaktion gebracht. Der Schmelzkuchen wird in heißem Wasser gelöst, Verunreinigungen werden abfiltriert und das Rohprodukt wird durch Zugabe von Methanol als weißes Pulver gefallt. Nach Trocknen im Vakuum wird letztgenanntes 24 Stunden im Ammoniakstrom bei 280°C getempert. In einem letzten Arbeitsschritt wird das Ammoniumpolyphosphat fein vermählen.

### Beispiel 2: Herstellung von einem Verbundwerkstoff aus NH₄PO₃ und SiO₂

NH₄PO₃ und SiO₂ werden - bezogen auf das Polyphosphat- im Verhältnis 40:1 eingewogen, vermischt und innig miteinander vermählen. Die Reaktion erfolgt 30 Minuten lang bei 440°C in Ammoniakatmosphäre. Nach anschließendem 24-stündigen Tempern bei 250°C im Ammoniakstrom wird der Verbundwerkstoff fein vermahlen.
Dieses Material wurde in porösem Siliziumoxid eingebettet. Das so erhalteae APP-K wurde getempert und verwendet für die in Fig.2, 3 und 6 gezeigten Messungen.

### Beispiel 3: Herstellung von einem Verbundwerkstoff aus NH₄PO₃ und Al(PO3)3

NH₄PO₃ und Al(PO3)3 werden - bezogen auf das Polyphosphat - im Verhältnis 10:1 eingewogen, vermischt und innig miteinander vermahlen. Die Reaktion erfolgt 1 Stunde lang bei 440°C in Ammoniakatmosphäre. Nach anschließendem 24-stündigen Tempern bei Z50°C im Ammoniakstrom wird der Verbundwerkstoff fein vermahlen.

### Beispiel 4: Herstellung eines mit Ammoniumpolyphosphat gefüllten Glasfaservlies

NH₄PO₃ wird bei 380°C aufgeschmolzen. In dieser Schmelze wird ein handelsübliches Glasfaservlies (80 Vol.% Porosität) getränkt. Die auf diese Weise erhaltene Kompositmembran wird dann auf Raumtemperatur abgekühlt.

### Beispiel 5: Herstellung einer recast-Membran aus Polymer und NH₄PO₃

Handelsübliche Nafion®-Lösung wird zusammen mit 15 Vol.-% DMSO, einem hochsiedenden Lösungsmittel, und 40 Gew.-% NH₄PO₃ in eine Petrischale gegossen. Um eine homogene Verteilung aller Komponenten des Gemisches zu sichern, stellt man den Ansatz 15 min in ein Ultraschallbad. Man lässt anschließend 24 h bei Raumtemperatur unter einer halboffenen Glashaube im eigenen Lösungsmitteldampf stehen. Die übrigen leichtsiedenden Komponenten werden durch Erwärmen auf 80°C über 10 h entfernt. Im folgenden Temperschritt wird die Membran stufenweise zur Maximaltemperatur, die bei mindestens 130°C liegen sollte, erhitzt. Durch Zugabe von Wasser lässt sich die Membran nach einigen Minuten leicht von der Schale abziehen. Um eine vollständige Protonierung sicherzustellen, wird die Membran in einer möglichst geringen Menge 3M-Schwefelsäure für eine Dauer von 2 h zum Siedepunkt erhitzt. Durch mehrmaliges Erhitzen zum Siedepunkt in einer möglichst geringen Menge entionisierten Wassers für eine Dauer von jeweils 5h werden die Schwefelsäure und die verbliebenen Lösungsmittelreste weitgehend entfernt. Die Membran wird in entionisiertem Wasser aufbewahrt

## Patentansprüche

1. Brennstoffzelle **dadurch gekennzeichnet, dass** der Elektroyt aus einem festen bzw. stabilisierten Ammoniumpolyphosphat (APP) und aus einer porösen Matrix aus der Gruppe: Oxide der Elemente der 3. und/oder 4. Gruppe des Periodischen Systems, Polymervliese, Glasfaservliese, Polymere besteht, die mit APP imprägniert ist.

2. Brennstoffzelle nach Anspruch 1 **dadurch gekennzeichnet, dass** die Matrix aus einem Zeolith oder aus Nafion besteht.

3. Brennstoffzelle nach Ansprüche 1 oder 2 **dadurch gekennzeichnet, dass** das APP aus Ammoniumpolyphosphat, oder
[NH₄PO₃]ₓ [SiO₂]_{y} mit y=1 und 4≤x≤104, bevorzugt mit 18≤x≤100, noch
bevorzugter mit 30≤x≤80, noch bevorzugter mit 40≤x≤60; oder
[NH₄PO₃]ₓ [GeO₂]_{y} mit y=1 und 4≤x≤104, bevorzugt mit 18≤x≤100, noch
bevorzugter mit 30≤x≤ 80, mit 40≤x≤60, oder
[NH₄PO₃]ₓ [Al(PO₃)₃]_{y} mit y=1 und 0.3 ≤x≤ 100, bevorzugt mit 3 ≤x≤100, noch
bevorzugter mit 5≤x≤80, mit 10≤x≤50, besteht.

4. Brennstoffzelle nach Ansprüche 1-3 **dadurch gekennzeichnet, dass** der Elektrolyt eine Dicke von 0,02-1 mm, bevorzugt 0,05-0,8 mm, noch bevorzugter 0,1-0,5 mm aufweist

5. Brennstoffzelle nach Ansprüche 1-3 **dadurch gekennzeichnet, dass** der Elektrolyt eine Dicke von 0,001-0,05 mm, bevorzugt 0,005-0,04 mm, noch bevorzugter 0,01-0,03 mm aufweist.

6. Brennstoffzelle nach Ansprüche 1-5 **dadurch gekennzeichnet, dass** der Brennstoff ein flüssiger oder gasförmiger Alkohol ist.

7. Brennstoffzelle nach Anspruch 6 **dadurch gekennzeichnet, dass** der Alkohol Methanol ist.

8. Brennstoffzelle nach Ansprüche 1-5 **dadurch gekennzeichnet, dass** der Brennstoff gereinigter oder ungereinigter Wasserstoff ist.

9. Brennstoffzelle nach Ansprüche 1-5 **dadurch gekennzeichnet, dass** der Brennstoff hauptsächlich Methan enthält.

10. Brennstoffzelle nach Ansprüche 1-9 **dadurch gekennzeichnet, dass** die Betriebstemperatur zwischen 200 und 600°C, bevorzugt 300-500°C, liegt.

11. Brennstoffzelle nach Ansprüche 1-10 **dadurch gekennzeichnet, dass** die Elektroden aus Platin, Edelmetallen, Metalloxiden, Platinlegierungen, Silber, Stahl und/oder Cermets bestehen und auch als Reagenzienverteiler dienen.

12. Brennstoffzelle nach Anspruch 11 **dadurch gekennzeichnet, dass** die Anode aus einem Cermet des Elektrolyten und Metallen sowie die Kathode aus Stahl, Edelmetallen, Metalloxiden, Edelmetallverbindungen bestehen.

13. Brennstoffzellenstack **dadurch gekennzeichnet, dass** er aus Brennstoffzellen nach Ansprüche 1-12 besteht.

14. Verwendung des Brennstoffzellenstacks nach Anspruch 13 für mobile, stationäre oder portable Anwendungen.

## Claims

1. Fuel cell, **characterised in that** the electrolyte consists of a solid or stabilised ammonium polyphosphate (APP) and of a porous matrix from the group: oxides of elements of Group III and/or IV of the periodic system, polymer fleeces, glass-fibre fleeces, polymers, which is impregnated with APP.

2. Fuel cell according to claim 1, **characterised in that** the matrix consists of a zeolite or of Nafion.

3. Fuel cell according to claim 1 or 2, **characterised in that** the APP consists of ammonium polyphosphate or
[NH₄PO₃]ₓ[SiO₂]_{y} wherein y = 1 and 4 ≤ x ≤ 104, preferably wherein 18 ≤ x ≤ 100, even more preferably wherein 30 ≤ x ≤ 80, even more preferably wherein 40 ≤ x ≤ 60; or
[NH₄PO₃]ₓ[GeO₂]_{y} wherein y = 1 and 4 ≤ x ≤ 104, preferably wherein 18 ≤ x ≤ 100, even more preferably wherein 30 ≤ x ≤ 80, wherein 40 ≤ x ≤ 60, or
[NH₄PO₃]ₓ[Al(PO₃)₃]_{y} wherein y = 1 and 0.3 ≤ x ≤ 100, preferably wherein 3 ≤ x ≤ 100, even more preferably wherein 5 ≤ x ≤ 80, wherein 10 ≤ x ≤ 50.

4. Fuel cell according to claims 1 - 3, **characterised in that** the electrolyte has a thickness of 0.02 - 1 mm, preferably 0.05 - 0.8 mm, even more preferably 0.1 - 0.5 mm.

5. Fuel cell according to claims 1 - 3, **characterised in that** the electrolyte has a thickness of 0.001 - 0.05 mm, preferably 0.005 - 0.04 mm, even more preferably 0.01 - 0.03 mm.

6. Fuel cell according to claims 1 - 5, **characterised in that** the fuel is a liquid alcohol or gaseous alcohol.

7. Fuel cell according to claim 6, **characterised in that** the alcohol is methanol.

8. Fuel cell according to claims 1 - 5, **characterised in that** the fuel is purified or unpurified hydrogen.

9. Fuel cell according to claims 1 - 5, **characterised in that** the fuel comprises mainly methane.

10. Fuel cell according to claims 1 - 9, **characterised in that** the operating temperature is between 200 and 600°C, preferably 300 - 500°C.

11. Fuel cell according to claims 1 - 10, **characterised in that** the electrodes consist of platinum, noble metals, metal oxides, platinum alloys, silver, steel and/or cermets and also serve as reagent distributors.

12. Fuel cell according to claim 11, **characterised in that** the anode consists of a cermet of the electrolyte and metals and the cathode consists of steel, noble metals, metal oxides and/or noble metal compounds.

13. Fuel cell stack, **characterised in that** it consists of fuel cells according to claims 1 - 12.

14. Use of the fuel cell stack according to claim 13 for mobile, stationary or portable applications.

## Revendications

1. Pile à combustible **caractérisée en ce que** l'électrolyte est constitué par un polyphosphate d'ammonium (PPA) solide ou stabilisé et une matrice poreuse prise dans le groupe comprenant des oxydes d'éléments du 3ème et/ou 4ème groupe de la Classification périodique des éléments, des nappes de polymères, des nappes de fibres de verre, des polymères, qui sont imprégnés de PPA.

2. Pile à combustible selon la revendication 1, **caractérisée en ce que** la matrice est constituée par un zéolithe ou le Nafion.

3. Pile à combustible selon les revendications 1 ou 2, **caractérisée en ce** le PPA est constitué par le polyphosphate d'ammonium ou
[NH₄PO₃]ₓ[SiO₂]_{y} avec y = 1 et 4 ≤ x ≤ 104, de préférence 18 ≤ x ≤ 100, de manière plus préférée 30 ≤ x ≤ 80, de manière encore plus préférée 40 ≤ x ≤ 60 ; ou
[NH₄PO₃]ₓ[GeO₃]_{y} avec y = 1 et 4 ≤ x ≤ 104, de préférence 18 ≤ x ≤ 100, de manière plus préférée 30 ≤ x ≤ 80, avec 40 ≤ x ≤ 60 ; ou
[NH₄PO₃]ₓ[Al(PO₃)₃]_{y} avec y = 1 et 0,3 ≤ x ≤ 100, de préférence 3 ≤ x ≤ 100, de manière plus préférée 5 ≤ x ≤ 80, avec 10 ≤ x ≤ 50.

4. Pile à combustible selon les revendications 1 à 3, **caractérisée en ce que** l'électrolyte présente une épaisseur de 0,02 à 1 mm, de préférence de 0,05 à 0,8 mm, de manière encore plus préférée de 0,1 à 0,5 mm.

5. Pile à combustible selon les revendications 1 à 3, **caractérisée en ce que** l'électrolyte présente une épaisseur de 0,001 à 0,05 mm, de préférence de 0,005 à 0,04 mm, de manière encore plus préférée de 0,01 à 0,03 mm.

6. Pile à combustible selon les revendications 1 à 5, **caractérisée en ce que** le combustible est un alcool liquide ou gazeux.

7. Pile à combustible selon la revendication 6, **caractérisée en ce que** l'alcool est le méthanol.

8. Pile à combustible selon les revendications 1 à 5, **caractérisée en ce que** le combustible est l'hydrogène purifié ou non purifié.

9. Pile à combustible selon les revendications 1 à 5, **caractérisée en ce que** le combustible renferme principalement le méthane.

10. Pile à combustible selon les revendications 1 à 9, **caractérisée en ce que** la température de service est comprise entre 200 et 600°C, de préférence de 300 à 500°C.

11. Pile à combustible selon les revendications 1 à 10, **caractérisée en ce que** les électrodes sont en platine, en métaux nobles, en oxydes métalliques, en alliages de platine, en argent, en acier et/ou cermets et servent aussi de distributeurs de réactifs.

12. Pile à combustible selon la revendication 11, **caractérisée en ce que** le l'anode est en un cermet de l'électrolyte et de métaux, ainsi que la cathode est en acier, en métaux nobles, en oxydes métalliques, en composés de métaux nobles.

13. Empilage de piles à combustible, **caractérisé en ce qu'**il est constitué par des piles à combustible selon les revendications 1 à 12.

14. Utilisation de l'empilage de piles à combustible selon la revendication 13, pour des applications mobiles, fixes ou portables.
